# EUROPÄISCHE PATENTANMELDUNG

(11) **EP 2 439 047 A2**
(43) Veröffentlichungstag der Anmeldung: **11.04.2012**
(21) Anmeldenummer: 11184656.4
(22) Anmeldetag: 11.10.2011
(51) Int. Cl.: B29C 49/68, B29C 49/06, B29C 49/42, B29C 35/08

(54) **Vorrichtung und Verfahren zum Erwärmen von Kunststoffvorformlingen**

(30) Priorität: 11.10.2010 DE 102010047914
(71) Anmelder: Krones AG, 93073 Neutraubling (DE)
(72) Erfinder: Winzinger, Frank, 93049 Regensburg (DE)
(74) Vertreter: Hannke, Christian

(57) **Zusammenfassung**

Eine Vorrichtung (1) zum Erwärmen von Kunststoffvorformlingen (10), mit wenigstens einer Erwärmungseinrichtung (2), welche einen Aufnahmeraum (4) zum Aufnehmen der Kunststoffvorformlinge aufweist, in dem die Kunststoffvorformlinge (10) erwärmbar sind, mit wenigstens einer Transporteinrichtung (6) zum Einführen der Kunststoffvorformlinge (10) in den Aufnahmeraum (4) und zum Ausführen der Kunststoffvorformlinge (10) aus dem Aufnahmeraum (4), wobei die Transporteinrichtung (6) wenigstens ein Transportelement (16) zum Halten der Kunststoffvorformlinge (10) aufweist, wobei dieses Transportelement (16) an einem beweglichen Träger (17,18) angeordnet ist. Erfindungsgemäß erstreckt sich dieser Träger (18) wenigstens abschnittsweise durch den Aufnahmeraum (4).

## Beschreibung

Die vorliegende Erfindung bezieht sich auf eine Vorrichtung und ein Verfahren zum Erwärmen von Kunststoffvorformlingen.

Aus dem Stand der Technik sind Vorrichtungen und Verfahren bekannt, bei denen Kunststoffvorformlinge erwärmt werden und anschließend die erwärmten Kunststoffvorformlinge in Blasvorrichtungen, wie beispielsweise Streckblasmaschinen, zu Kunststoffbehältnissen umgeformt werden. Dabei sind in jüngerer Zeit auch Vorrichtungen bekannt geworden, bei denen derartige Erwärmungseinrichtungen, d. h. Öfen, Heizstationen aufweisen, um die Vorformlinge individuell zu erwärmen. So beschreibt beispielsweise die DE 10 2007 022 386.4 einen Mikrowellenofen zum Erwärmen von Kunststoffvorformlingen, bei denen die Kunststoffvorformlinge in einen Resonator hineingefahren, dort erwärmt und anschließend im erwärmten Zustand wieder dem Resonator entnommen werden. Die US 2003/0001311 A1 beschreibt eine Vorrichtung zum Herstellen von Kunststoffvorformlingen zum Erwärmen derselben. Dabei durchlaufen die Kunststoffvorformlinge einen stationär angeordneten Ofen um in diesem erwärmt zu werden.

Aus der DE 2 320 643 ist ein Verfahren zum Erwärmen von thermoplastischen Vorformlingen bekannt. Dabei wird der Vorformling mit einer Mikrowellenenergie in einer Dauer zwischen einer halben und 30 Sekunden beaufschlagt, wobei das Mikrowellenfeld so ausgebildet ist, dass bestimmte Teile des Vorformlings selektiv erwärmt werden.

Aus der WO 03/055665 ist ein Verfahren zur Temperierung von Vorformlingen bekannt, wobei die Vorformlinge zeitweilig mit einer elektromagnetischen Strahlung beaufschlagt werden. Hierbei werden die Kunststoffvorformlinge senkrecht zu ihrer Längsrichtung durch eine Heizeinrichtung transportiert.

Der vorliegenden Erfindung liegt die Aufgabe zugrunde, die Erwärmung von Kunststoffvorformlingen zeiteffizienter zu gestalten. Dies wird erfindungsgemäß durch eine Vorrichtung und ein Verfahren nach den unabhängigen Ansprüchen erreicht. Vorteilhafte Ausführungsformen und Weiterbildungen sind Gegenstand der Unteransprüche.

Eine erfindungsgemäße Vorrichtung zum Erwärmen von Kunststoffvorformlingen weist wenigstens eine Erwärmungseinrichtung auf, welche einen Aufnahmeraum zum Aufnehmen der Kunststoffvorformlinge aufweist, in dem die Kunststoffvorformlinge erwärmbar sind. Weiterhin weist die Vorrichtung wenigstens eine Transporteinrichtung zum Einführen der Kunststoffvorformlinge in den Aufnahmeraum und zum Ausführen der Kunststoffvorformlinge aus dem Aufnahmeraum auf. Dabei weist die Transporteinrichtung wenigstens ein Transportelement zum Halten der Kunststoffvorformlinge auf, wobei dieses Transportelement an einem beweglichen Träger angeordnet ist.

Erfindungsgemäß erstreckt sich dieser Träger wenigstens abschnittsweise durch den Aufnahmeraum. Vorteilhaft weist die Transporteinrichtung wenigstens zwei Transportelemente auf, welche an dem genannten Träger angeordnet sind.

Auch aus dem Stand der Technik sind Heizeinrichtungen bekannt, bei denen die Kunststoffvorformlinge beispielsweise an Transportketten durch Heizelemente gefördert werden. Dabei verlaufen diese Transportketten selbst nicht durch die einzelnen Erwärmungsbereiche, vielmehr wird bewusst eine Erwärmung dieser Träger verhindert.

Erfindungsgemäß wird nunmehr vorgeschlagen, dass die Kunststoffvorformlinge gemeinsam mit ihren Transportträgern durch den jeweiligen Aufnahmeraum gefördert werden. Vorteilhaft ist der Träger aus einer Gruppe von beweglichen Trägern angeordnet, welche Transportbänder, Transportketten, Spindeln, Transportscheiben und dergleichen enthält.

Bei dem Träger kann es sich jedoch auch um einen Verbindungsträger oder Zwischenträger handeln, an dem das Transportelement angeordnet ist, wobei dieser Verbindungsträger wiederum an einem Hauptträger angeordnet sein kann.

Vorteilhaft handelt es sich bei dem Träger um ein Transportband oder eine Transportkette, an der mindestens zwei und bevorzugt eine Vielzahl von Transportelementen zum Halten der Kunststoffvorformlinge angeordnet ist. Bei diesen Transportelementen kann es sich beispielsweise um Dorne, welche in den Mündungen der Behältnisse eingreifen, aber auch um Greifklammern, welche die Behältnisse an oder unter einem Tragring der Behältnisse halten, handeln.

Vorteilhaft ist die Transportrichtung umlaufend ausgebildet, beispielsweise als umlaufende Transportkette, wobei ein Bereich dieser Kette durch den besagten Aufnahmeraum hindurch verläuft. Vorteilhaft fördert die Transporteinrichtung die Kunststoffvorformlinge kontinuierlich durch den Aufnahmeraum. Dies ist insbesondere bei der Förderung durch mehrere Aufnahmeräume möglich. Weiterhin ist auch an eine alternierende bzw. schrittweise Förderung gedacht, um bestimmte Bereiche eines Vorformlings länger beheizen zu können, bis er in dem Bereich eine bestimmte Temperatur aufweist.

Bei einer weiteren vorteilhaften Ausführungsform weist die Vorrichtung eine Zuführöffnung zum Zuführen der Kunststoffvorformlinge in den Aufnahmeraum auf sowie auch eine Abführöffnung zum Abführen der Kunststoffvorformlinge aus dem Aufnahmeraum.

Bei einer weiteren vorteilhaften Ausführungsform ist die Vorrichtung mikrowellenbasiert und der Aufnahmeraum ist innerhalb eines Resonators der Vorrichtung ausgebildet. Auf diese Weise bewegt sich auch der Träger durch den Aufnahmeraum des besagten Resonators.

Vorteilhaft besteht der Träger aus einem Nichtmetall und besonders bevorzugt aus einem Material wie beispielsweise Keramik, Porzellan oder Kunststoff welches auch nicht wesentlich durch Mikrowellenstrahlung erwärmt wird. Des Weiteren kann insbesondere auch eine Kühleinrichtung wie beispielsweise ein Gebläse vorgesehen sein, welches die durch den Aufnahmeraum transportierten Träger oder Teile der Transporteinrichtung kühlt. Ebenfalls ist an eine Innenkühlung der Transporteinrichtung mittels Wasser oder anderen Fluiden gedacht. Beim Einsatz von Infrarotstrahlung im Aufnahmeraum könnte der Träger und Teile der Fördereinrichtung auch aus metallischen Materialien bestehen, die besonders Temperaturfest sind. Hier würden sich auch mit der Transporteinrichtung förderbare oder gegenüber dem Aufnahmeraum stationär angeordnete Abschirmungen für die Träger oder andere Teile der Transporteinrichtung anbieten. Die Träger und/oder andere Teile der Transporteinrichtung und/oder die Abschirmungen sind vorteilhaft reflektierend ausgebildet. Dies kann beispielsweise durch eine polierte Metalloberfläche aber auch durch keramische Materialien realisiert werden.

Bei einer weiteren vorteilhaften Ausführungsform erstreckt sich der Träger wenigstens abschnittsweise in einer Längsrichtung der Kunststoffvorformlinge durch den Aufnahmeraum. Auf diese Weise ist es in besonders vorteilhafter Weise möglich, die Kunststoffvorformlinge entlang deren Längsrichtung durch den Aufnahmeraum zu bewegen. Damit transportiert bei einer weiteren vorteilhaften Ausführungsform die Transporteinrichtung die Kunststoffvorformlinge entlang deren Längsrichtung durch den Aufnahmeraum. Weiterhin wäre es auch möglich, dass sich an den ersten Aufnahmeraum ein zweiter Aufnahmeraum anschließt, sodass die Kunststoffvorformlinge beide Aufnahmeräume durchlaufen.

Daneben kann die Vorrichtung auch eine Vielzahl von Aufnahmeräumen aufweisen, die bevorzugt zumindest teilweise zeitgleich von den Kunststoffvorformlingen durchlaufen werden. Entsprechend kann auch eine Vielzahl von Transporteinrichtungen vorgesehen sein.

Damit werden bei diesen Ausführungsformen sowohl die Transportelemente als auch deren Träger mit Mikrowellen beaufschlagt.

Neben oder anstelle eines Mikrowellenofens wäre es auch denkbar, dass die Erwärmungseinrichtung die Kunststoffvorformlinge mittels Laser erwärmt oder auch mittels Infrarot und insbesondere mittels STIR (selektiertes transformiertes Infrarot) oder Kombinationen hieraus und/oder Mikrowellenstrahlung.

Vorteilhaft sind die Aufnahmeräume stationär angeordnet und die Kunststoffvorformlinge werden durch diese stationär angeordneten Aufnahmeräume transportiert. Weiterhin wäre es auch möglich, dass die Aufnahmeräume drehend angeordnet sind, sich beispielsweise auf einem gemeinsamen Trägerrad drehen oder sich individuell um eine vorgegebene Drehachse drehen. Weiterhin wäre es denkbar, dass ein Aufnahmeraum einer bestimmten Anzahl von Blasstationen, in denen die Vorformlinge nach der Erwärmung in dem Aufnahmeraum mittels Druckluft umgeformt werden, zugeordnet ist. Durch die höhere Ausnutzung eines Aufnahmeraums ist es insbesondere möglich, diesen nur einer Blasstation fest zuzuordnen. Denkbar wäre aber auch, dass zwei Aufnahmeräume einer Blasstation, aber auch zwei Blasstationen einem Aufnahmeraum fest zugeordnet sind. Unter Zuordnung wird verstanden, dass der Transportpfad nach dem Erreichen eines bestimmten Aufnahmeraums auf eine, bzw. auf zwei Blasstationen beschränkt ist, obwohl in der Streckblasmaschine noch weitere Blasstationen, die anderen Aufnahmeräumen zugeordnet sind, vorhanden sind. Dabei können sowohl die Blasstationen als auch die Aufnahmeräume auf einem gemeinsamen oder zwei getrennten, rotierenden Trägerrädern angeordnet sein. In dem Fall könnte das Transportsystem auch auf dem Trägerrad mitrotieren. Auch eine stationäre Anordnung der Blasstationen und der Aufnahmeräume wäre hier auf einem gemeinsamen oder zwei unterschiedlichen Trägern denkbar. Allgemein ist auch daran gedacht, mit dem erfindungsgemäßen Träger auf dem Transportsystem, die Vorformlinge im Anschluss an die Erwärmung in die Formen einer Blasstation zu fördern.

Insbesondere kann durch die Zuordnung von mindestens einem Aufnahmeraum zu mindestens einer Blasstation, was ein Modul darstellt, eine eigenständige Regelung der Prozessparameter je Modul wie beispielsweise einer Erwärmungsdauer, ein Erwärmungsbeginn, ein Reckbeginn, ein Blasbeginn, eine Blasdauer, eine Dauer für die Rückgewinnung von Blasluft, eine Kühl- bzw. Spüldauer mittels Druckluft und weitere Parameter vorgesehen sein. Somit sind auch unterschiedliche Ausbringleistungen für unterschiedliche Module möglich. Dies findet insbesondere Anwendung bei Streckblasmaschinen, die in einem Produktionsdurchlauf unterschiedliche Behälter produzieren. Dabei können sich die Behälter im Volumen, in der Dicke, in der Kristallinität, in der Farbe oder im Material oder in anderen chemischen, geometrischen oder physikalischen Größen unterscheiden.

Insbesondere wurde daran gedacht, durch höhere Ausnutzung eines Aufnahmeraums, in einer Streckblasmaschine die gleiche Anzahl von Blasstationen und Aufnahmeräumen vorzusehen, auch wenn keine feste Zuordnung vorgegeben wird.

Bei einer weiteren vorteilhaften Ausführungsform weist die Transporteinrichtung eine Zuführeinrichtung zum Zuführen der Kunststoffvorformlinge in den Aufnahmeraum und eine Abführeinrichtung zum Abführen der Kunststoffvorformlinge aus dem Aufnahmeraum auf und die Zuführeinrichtung sowie die Abführeinrichtung sind voneinander getrennte Einheiten. Dabei ist es beispielsweise möglich, dass sowohl die Zuführeinrichtung einen Träger mit Transportelementen aufweist, als auch die Abführeinrichtung einen Träger mit Transportelementen aufweist. So können die Kunststoffvorformlinge beispielsweise von einer Zuführeinrichtung durch den Aufnahmeraum transportiert und nach dem Transport von der Abführeinrichtung übernommen werden. Auch ist es möglich, dass die Zuführeinrichtung und die Abführeinrichtung unterschiedliche Antriebe aufweisen. Vorteilhaft weist die Zuführeinrichtung und besonders bevorzugt auch die Abführeinrichtung ein Transportelement zum Halten des Kunststoffvorformlings auf. Vorteilhaft handelt es sich bei diesen Transportelementen um Greifklammern.

Vorteilhaft ist der Aufnahmeraum zwischen der Zuführeinrichtung und der Abführeinrichtung angeordnet. So wäre es möglich, dass die Kunststoffvorformlinge beispielsweise mittels Greifklammern an den Aufnahmeraum herangeführt werden, anschließend (beispielsweise mittels Heizdornen) durch den Aufnahmeraum hindurchgeführt werden und schließlich mit der Abführeinrichtung wieder abgeführt werden.

Bei einer weiteren vorteilhaften Ausführungsform weist die Vorrichtung eine Dreheinrichtung zum Drehen der Kunststoffvorformlinge bezüglich deren Längsachse auf. Vorteilhaft bewirkt diese Dreheinrichtung, dass eine Drehung des Kunststoffvorformlings während dessen Erwärmung möglich ist. Vorteilhaft handelt es sich hierbei um eine mechanisch wirkende Dreheinrichtung bzw. eine Dreheinrichtung, deren Drehung sich aus der Transportbewegung der Kunststoffvorformlinge ergibt. Ebenfalls ist daran gedacht, die Heizeinrichtung zu drehen und den Vorformling nicht. Auch könnte der Vorformling nur zeitweise beim Transport durch den Aufnahmeraum gedreht werden, womit ein sogenanntes 3preferential heating" ähnlich zu dem Verfahren aus dem Dokument EP 958 124 B1 durchführbar wäre. Dies wäre auch durch einen dezentralen Transport durch den Aufnahmeraum realisierbar, so dass bestimmte Bereiche der Außenwandung des Vorformlings zumindest zeitweise näher an der Strahlungsquelle vorbeitransportiert werden. Insbesondere handelt es sich bei der Dreheinrichtung um einen Servomotor, der an der Transporteinrichtung angeordnet ist.

Bei einer weiteren vorteilhaften Ausführungsform weist die Vorrichtung eine Vorwärmeinheit zum Vorwärmen der Kunststoffvorformlinge auf, welche in der Transportrichtung der Kunststoffbehältnisse stromaufwärts bezüglich der oben beschriebenen Vorrichtung angeordnet ist. Diese Vorwärmung ist insbesondere vorteilhaft, wenn es sich bei der Heizeinrichtung um eine mikrowellenbasierte Heizeinrichtung handelt.

Allgemein kann insbesondere an oder in jeder Aufnahmeeinheit ein Temperatursensor angeordnet sein, der die aktuelle Temperatur eines gewissen Bereichs eines Vorformlings in der Aufnahmeeinheit misst und ein Signal an eine Steuerung weitergibt. Die Steuerung vergleicht dieses Signal mit einem Sollwert und steuert daraufhin einen Antrieb der Transportvorrichtung. Bei Erreichen einer vorgegebenen Temperatur wird der Vorformling um eine gewisse Strecke von der Transporteinrichtung weitertransportiert und der nächste Bereich erwärmt.

Die vorliegende Erfindung ist weiterhin auf ein Verfahren zum Erwärmen von Kunststoffvorformlingen gerichtet, bei dem die Kunststoffvorformlinge mittels einer Transporteinrichtung in einem Aufnahmeraum zum Aufnehmen der Kunststoffvorformlinge eingeführt werden und mittels der oder einer Transporteinrichtung aus dem Aufnahmeraum ausgeführt werden und die Kunststoffvorformlinge innerhalb des Aufnahmeraums erwärmt werden. Dabei wird wenigstens ein Element wenigstens einer Transporteinrichtung wenigstens zeitweise während eines Erwärmungsvorgangs innerhalb des Aufnahmeraums bewegt.

Es wird daher auch verfahrensseitig vorgeschlagen, Bestandteile der Transporteinrichtung und insbesondere einen Träger derselben durch den Aufnahmeraum zu bewegen.

Vorteilhaft werden die Kunststoffvorformlinge vereinzelt mit einer Vielzahl von an einem Träger angeordneten Transportelementen transportiert und der Träger bewegt sich zumindest abschnittsweise innerhalb des Aufnahmeraums.

Vorteilhaft erfolgt der Transport der Kunststoffvorformlinge in deren Längsrichtung. In einem weiteren vorteilhaften Verfahren werden die Kunststoffvorformlinge kontinuierlich durch die Erwärmungsvorrichtung transportiert.

Bei einem weiteren vorteilhaften Verfahren werden die Kunststoffvorformlinge an dem Aufnahmeraum in einer ersten Position zugeführt und aus dem Aufnahmeraum an einer zweiten Position abgeführt, wobei sich die erste Position und die zweite Position unterscheiden. Zum Beispiel können die zwei Positionen horizontal versetzt zueinander sein oder so angeordnet sein, dass mindestens ein Aufnahmeraum in insbesondere lotrechter Richtung dazwischen liegt oder Kombinationen hieraus.

Weitere Vorteile und Ausführungsformen ergeben sich aus den beigefügten Zeichnungen:

Darin zeigen:
- Fig. 1: eine schematische Darstellung einer Vorrichtung zum Erwärmen von Kunststoffbehältnissen nach dem Stand der Technik;
- Fig. 2a, 2b: zwei Darstellungen einer erfindungsgemäßen Vorrichtung zum Erwärmen von Kunststoffbehältnissen;
- Fig. 3a, 3b: zwei Darstellungen einer weiteren Ausführungsform einer erfindungsgemäßen Vorrichtung;
- Fig. 4a, 4b: zwei Darstellungen einer weiteren Ausführungsform einer erfindungsgemäßen Vorrichtung;
- Fig. 5: eine weitere Ausführungsform einer erfindungsgemäßen Vorrichtung zum Erwärmen von Kunststoffvorformlingen;
- Fig. 6: eine weitere Ausführungsform einer erfindungsgemäßen Vorrichtung zum Erwärmen von Kunststoffvorformlingen;
- Fig. 7: eine weitere Ausführungsform einer erfindungsgemäßen Vorrichtung zum Erwärmen von Kunststoffvorformlingen;
- Fig. 8: eine weitere Ausführungsform einer Vorrichtung zum Erwärmen von Kunststoffvorformlingen; und
- Fig. 9a-9c: eine erfindungsgemäße Vorrichtung mit Dreheinrichtungen zum Drehen der Kunststoffvorformlinge.

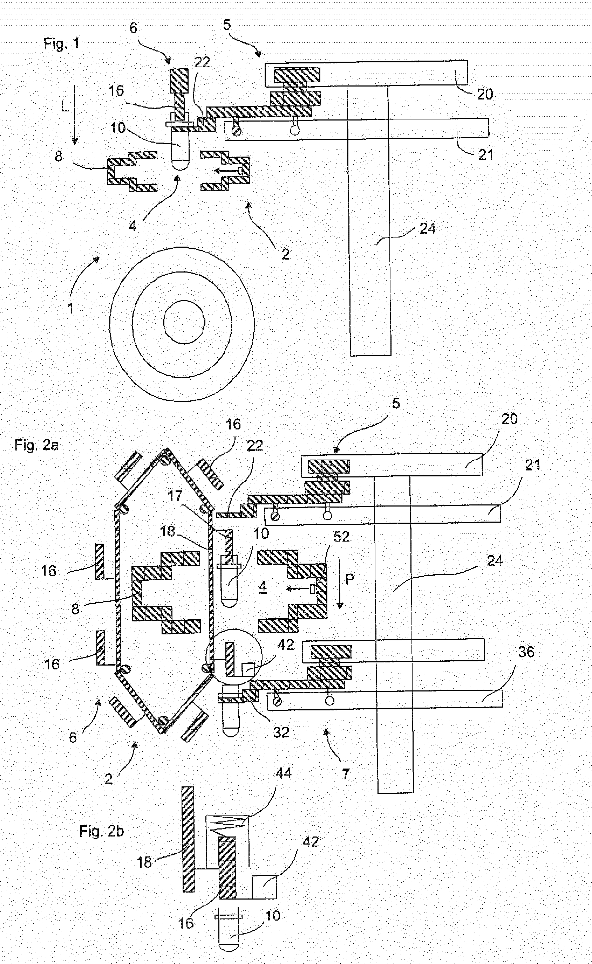

Fig. 1 zeigt eine Darstellung zur Veranschaulichung einer Vorrichtung 1 zum Erwärmen von Kunststoffvorformlingen 10 nach dem Stand der Technik. Dabei weist diese Vorrichtung hier eine Zuführeinrichtung 5 auf, mit der die Kunststoffvorformlinge 10 transportiert werden. Das Bezugszeichen 6 bezieht sich auf eine Transporteinrichtung, welche hier ein Transportelement 16 in Form eines Dorns aufweist, der in eine Mündung der Behältnisse ragt, um diese in der Richtung L durch einen Aufnahmeraum 4 zu transportieren. Der Aufnahmeraum 4 ist hier Teil eines Resonators 8, innerhalb dessen die Kunststoffvorformlinge 10 mit Mikrowellen beaufschlagt werden.

Das Bezugszeichen 22 kennzeichnet ein Transportelement, welches den Kunststoffvorformling 10 hält, beispielsweise in Form einer Greifklammer. Das Bezugszeichen 20 bezieht sich auf einen Träger, wie beispielsweise ein Transportrad, an dem eine Vielzahl derartiger Transportelemente 22 angeordnet ist. Dieses Rad 22 ist dabei mittels einer Welle 24 drehbar. Das Bezugszeichen 21 bezieht sich auf eine (insbesondere stationäre) Kurvenscheibe, in der die Transportelemente gesteuert verfahrbar sind.

Vorteilhaft handelt es sich bei der Zuführeinrichtung 5 um einen Rundläufer. Bei dem in Fig. 1 gezeigten Stand der Technik wird der Kunststoffvorformling von oben her in den Aufnahmeraum 4 gefahren und auch nach oben wieder herausgezogen. Auf diese Weise wird in der Zeit für das Hinausfahren des Kunststoffvorformlings aus dem Resonator 8 und auch bei einem Rundläufer zwischen dem Auslauf und dem Einlauf der Kunststoffvorformlinge der Aufnahmeraum 4 bzw. die Kavität nicht genutzt. Eine nicht dargestellte Mikrowellenerzeugungseinrichtung (Magnetron) wird hierfür zeitweise ausgeschaltet.

Ausgehend von diesem Stand der Technik wird nunmehr vorgeschlagen, insbesondere in einem kontinuierlichen Prozess, die Kapazität der Heizeinrichtung bzw. insbesondere einer Mikrowellenheizeinrichtung besser auszunutzen und auf diese Weise pro Anzahl der für die Ausbringleistung der Maschine erforderlichen Kunststoffvorformlinge die Anzahl der Heizkavitäten (Resonatoren) zu senken. Genauer gesagt kann bei einer gleichen Anzahl von nachfolgenden Blasstationen die Anzahl der Resonatoren gesenkt werden, wodurch geringere Herstellungskosten ermöglicht werden.

Die Fig. 2a und 2b zeigen zwei Darstellungen einer ersten erfindungsgemäßen Ausführungsform. Dabei ist auch hier wieder eine Zuführeinrichtung 5 vorgesehen, welche die Kunststoffvorformlinge 10 Transportelementen 16 zuführt. Dabei werden jedoch hier die Kunststoffvorformlinge 10 Kopf an Kopf durch den Resonator bzw. den Aufnahmeraum 4 geführt und bewegen sich dabei nur in einer Richtung durch den besagten Aufnahmeraum, d. h. genauer entlang der Richtung des Pfeils P. Nach dem Durchlaufen werden die Kunststoffvorformlinge von einer Abführeinrichtung 7 übernommen und abtransportiert. Das Bezugszeichen 18 kennzeichnet entsprechend einen Träger hier beispielsweise in der Art einer Transportkette, der sich durch den Aufnahmeraum 4 erstreckt. Das Bezugszeichen 32 kennzeichnet ein weiteres Halteelement für den Kunststoffvorformling, insbesondere in der Art einer Greifklammer. Das Bezugszeichen 36 kennzeichnet einen weiteren Träger, an dem hier wieder eine Vielzahl von Transportelementen 32 angeordnet ist. Der Aufnahmeraum 4 umgibt den Kunststoffvorformling während der Erwärmung in dessen Umfangsrichtung vollständig.

Weiterhin wäre es möglich, dass an dem Transportelement 16 ein (nicht gezeigtes) Abschirmmittel vorgesehen ist, welches eine Mündung des Kunststoffvorformlings gegenüber der Strahlung, insbesondere Infrarotstrahlung oder Mikrowellenstrahlung, abschirmt, etwa in der Art einer Hülse, welche das Gewinde des Kunststoffvorformlings abdeckt. Auf diese Weise kann erreicht werden, dass das Gewinde des Kunststoffvorformlings nicht erwärmt wird. Das Bezugszeichen 2 kennzeichnet die Erwärmungseinrichtung in ihrer Gesamtheit.

Das Bezugszeichen 42 kennzeichnet eine Einrichtung zum Lösen der Kunststoffvorformlinge von dem Transportelement 16. Dabei ist es möglich, dass das Transportelement bzw. der Heizdorn 16 durch eine Federeinrichtung 44 zurückbewegbar ist, um den Kunststoffvorformling zu entnehmen. Das Bezugszeichen 42 kennzeichnet damit genauer eine stationäre Nocke, welche zum Zurückschieben des Transportelements 16 dient. Dabei ist es möglich, dass diese Nocke durch einen Pneumatikzylinder oder dergleichen betätigt wird.

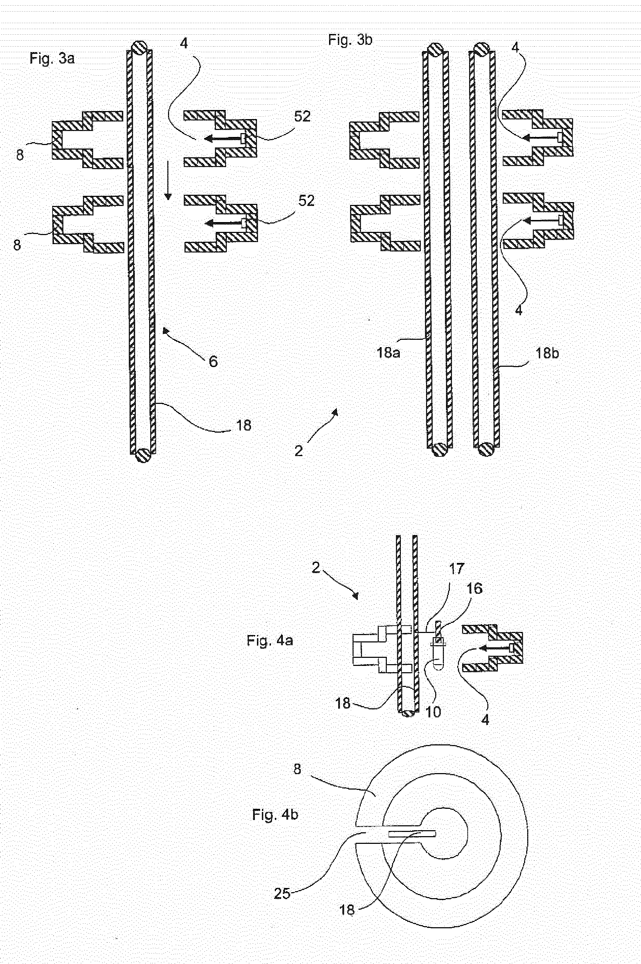

Die Fig. 3a und 3b zeigen zwei weitere schematische Darstellungen von erfindungsgemäßen Ausgestaltungen. Bei der in Fig. 3a gezeigten Ausführungsform ist wiederum eine Transporteinrichtung 6 mit einem abschnittsweise durch die Aufnahmeräume 4 bewegbaren Träger 18 vorgesehen. Dabei sind hier jedoch zwei hintereinander angeordnete Resonatoren vorgesehen, d. h. die Kunststoffvorformlinge werden hier durch beide Resonatoren geführt. Dabei können die hier nicht gezeigten Transportelemente in gleichem oder einem Mehrfachen Abstand zueinander angeordnet sein wie die Aufnahmeräume 4 zueinander. Auch die Aufnahmeräume 4 können in einem gleichen oder mehrfach Vielfachen Abstand zu den Transportelementen angeordnet sein. Auf diese Weise ergeben sich bei Verweilzeiten an derselben Stelle gleiche Erwärmungsbedingungen in jedem Aufnahmeraum 4. Eine Temperaturregelung der einzelnen Aufnahmeräume 4, bevorzugt also der Zeit, in der ein Vorformling 10 in einem Aufnahmeraum erwärmt wird, bis er in einem bestimmten, insbesondere axialem, Bereich eine spezielle Temperatur erreicht, ist insbesondere in jedem der Aufnahmeräume 4 vorgesehen. Um ein ungewolltes Erwärmen über eine Solltemperatur an einer bestimmten Stelle zu vermeiden, können einzelne Strahlungserzeugungseinrichtungen der Aufnahmeräume 4 zeitweise ausgeschaltet werden. Denkbar wäre aber auch eine Abschirmung des Vorformlings 10 durch nicht gezeigte zustellbare Abschirmungen.

Dabei wäre es ebenso möglich, dass die beiden Resonatoren wechselseitig angesteuert werden, sodass jeder Vorformling 10 nur in einem der beiden Aufnahmeräume 4 erwärmt wird. Ein Vorteil, der sich bei mehreren Heizeinrichtungen 2 ergibt, ist, dass Ungleichmäßigkeiten in der Erwärmung in der Wanddicke in der Zeit des Transports zwischen den Aufnahmeräumen 4 ausgeglichen werden können. In der Wanddicke heißt: die Innenwandung des Vorformlings 10 weist eine andere Temperatur auf als die Außenwandung im gleichen Bereich. Speziell bei mehreren Aufnahmeräumen, welche die die Vorformlinge 10 durchlaufen, könnte der Transport insbesondere kontinuierlich durchgeführt werden. Eine Steuerung eines Temperaturprofils erfolgt dann insbesondere durch eine zentrale Steuerung, die die Temperaturmesssignale der ersten Aufnahmeräume 4 vergleicht und die letzten Aufnahmeräume 4 in der Strahlungsstärke dementsprechend steuert. Dies kann auch zur Regelung der ersten Aufnahmeräume 4 für die nachfolgenden Vorformlinge 10 verwendet werden.

Bei der in den Fig. 3a und 3b gezeigten Ausführungsform sind zwei zueinander parallele Transporteinrichtungen 18a, 18b dargestellt, welche jeweils durch die beiden Aufnahmeräume 4 (denkbar wäre hier auch nur ein Aufnahmeraum) hindurchführen. An diesen jeweiligen Transporteinrichtungen 6 sind (nicht gezeigt) die Kunststoffvorformlinge angeordnet.

Der Transport der Kunststoffvorformlinge erfolgt bei den in Fig. 3a und 3b gezeigten Ausführungsformen kontinuierlich. Das Bezugszeichen 52 kennzeichnet eine Sensoreinrichtung, welche berührungslos eine Temperatur der Kunststoffvorformlinge 10 bestimmt.

Fig. 4a und 4b zeigen eine weitere Ausführungsform einer erfindungsgemäßen Vorrichtung. Bei dieser Ausführungsform weist der Resonator bzw. der Aufnahmeraum 8 einen Spalt 25 auf, der insbesondere zu Montagezwecken dient. Dabei ist hier die Transporteinrichtung 6 gegenüber dem Resonator nach links versetzt und die Kunststoffvorformlinge 10 werden hier mittels des Zwischenträgers 17 durch den Aufnahmeraum 4 geführt. Bei dieser Ausführungsform werden daher die einzelnen Zwischenträger 17 jeweils abschnittsweise durch den Aufnahmeraum 4 geführt. Der Träger 18, an dem wiederum die einzelnen Zwischenträger 17 angeordnet sind, muss bei dieser Ausführungsform nicht notwendig durch den Aufnahmeraum 4 verlaufen, sondern könnte, wie in Fig. 4a gezeigt, auch nach links bzw. allgemein exzentrisch versetzt werden.

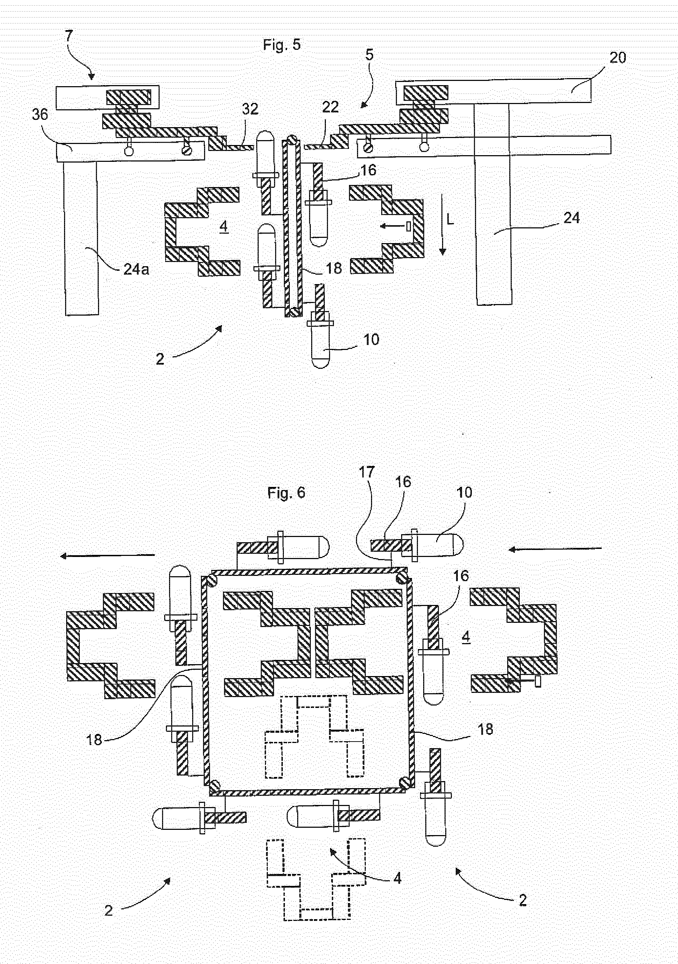

Fig. 5 zeigt eine weitere Ausführungsform einer erfindungsgemäßen Vorrichtung. Bei dieser Ausführungsform werden die Kunststoffvorformlinge 10 in zwei Richtungen, d. h. in der Richtung L und entgegengesetzt der Richtung L durch den Aufnahmeraum gefördert. Dabei werden hier ebenfalls die Kunststoffvorformlinge über die Zuführeinrichtung 5 zugeführt und über die Abführeinrichtung 7 entnommen. Zusätzlich kann noch eine Schwenkeinrichtung vorgesehen sein, welche die Kunststoffvorformlinge vor oder nach deren Erwärmung um 180° schwenkt, sodass sie der nachfolgenden Blasmaschine wieder mit der Mündung nach oben zugeführt werden können. Das Bezugszeichen 24a bezieht sich auf eine zweite Welle.

Fig. 6 zeigt eine weitere Ausführungsform einer erfindungsgemäßen Vorrichtung. Zusätzlich zu der in Fig. 5 gezeigten Ausführungsform kann hier ein weiterer Aufnahmeraum vorgesehen sein, durch den die Kunststoffvorformlinge 10 ebenfalls gefördert werden können. Weiterhin kann auch hier eine weitere Schwenkeinrichtung vorgesehen sein, welche die Kunststoffvorformlinge um 180° schwenkt, damit diese wieder in einer vorgegebenen Orientierung in die nachfolgende Blasmaschine gelangen. Schließlich kann auch noch ein dritter Aufnahmeraum (gestrichelt dargestellt) vorgesehen sein, durch den die Vorformlinge 10 in horizontaler Richtung entlang deren Längsachse transportiert werden.

Damit werden bei den hier gezeigten Ausführungsformen die Kunststoffvorformlinge jeweils entlang ihrer Längsachse durch die Heizeinrichtungen transportiert. Weiterhin ist es auch möglich, dass die Kunststoffvorformlinge in gewünschter Weise profiliert werden können, z.B. indem die jeweiligen Transportsysteme an bestimmten Stellen anhalten oder ihre Geschwindigkeit variieren. Wie weiterhin erkennbar ist, umgeben die Resonatoren bzw. Aufnahmeräume die jeweiligen Kunststoffvorformlinge in deren Umfangsrichtung vollständig, wobei dies nicht nur bei Mikrowellenresonatoren möglich wäre, sondern auch für Infrarot oder STIR-Heizkammern. Bei den oben bezeichneten Ausführungsformen mit den mehreren aufeinanderfolgend angeordneten Aufnahmeräumen wäre es beispielsweise auch möglich, unterschiedliche Erwärmungsmethoden anzuwenden, beispielsweise zweimal eine Mikrowellenerwärmung, einmal eine Infraroterwärmung und einmal eine Lasererwärmung. Auf diese Weise wäre es beispielsweise möglich, unterschiedliche Gattungen von Behältnissen zu erwärmen, insbesondere jedoch auch, die Kunststoffvorformlinge vorzuwärmen.

Vorteilhaft liegt ein Abstand zwischen den einzelnen Kunststoffvorformlingen von der Mündung eines Kunststoffvorformlings bis zur Kuppe des nächsten Kunststoffvorformlings bzw. zum Anspritzpunkt während des Transports bei weniger als 1 m, vorteilhaft bei weniger als 40 cm und besonders bevorzugt bei weniger als 20 cm. Daneben wäre es auch möglich, zwei unterschiedliche Kunststoffvorformlinge gleichzeitig oder nacheinander durch die jeweiligen Aufnahmeräume zu fördern, beispielsweise Kunststoffvorformlinge mit unterschiedlicher Farbe, mit unterschiedlichen Halsdurchmessern oder mit unterschiedlicher Länge. Daneben wäre eine weitere Behandlung der Kunststoffvorformlinge entlang des Transportpfades denkbar, wie beispielsweise sogenanntes Preferential Heating, bei dem bestimmte Bereiche des Kunststoffvorformlings anders erwärmt werden als andere Bereiche, eine Etikettierung, eine Sterilisation, eine Beschichtung und dergleichen.

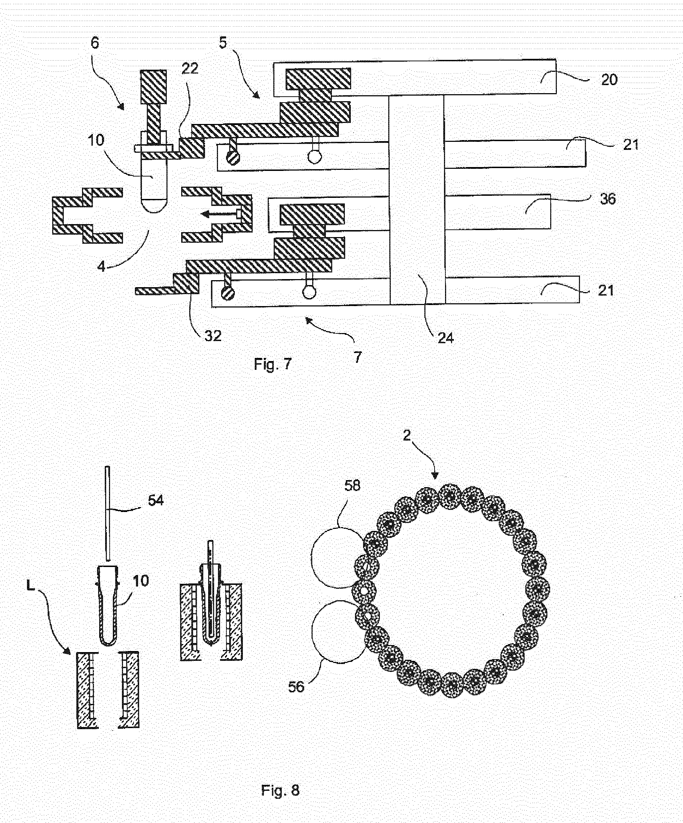

Fig. 7 zeigt eine weitere Ausführungsform einer erfindungsgemäßen Vorrichtung zum Erwärmen von Kunststoffvorformlingen. Bei dieser Ausführungsform ist wiederum ein Aufnahmeraum 4 vorgesehen, dem die Kunststoffvorformlinge entlang ihrer Längsrichtung L zugeführt werden. Die Transporteinrichtung 6 ist hier ohne den Träger dargestellt. Dieser verläuft jedoch auch hier durch den Aufnahmeraum 4. Bei der gezeigten Ausführungsform übergibt das Transportelement 22 den Kunststoffvorformling 10 an das Transportelement 6 und dieses gibt den Kunststoffvorformling nach dessen Erwärmung wiederum an das Transportelement 32 ab. Ein weiteres Transportelement 32, welches auf dem Träger 36 angeordnet ist, übergibt daraufhin den nächsten zu erwärmenden Vorformling 10 an das Transportelement 6. Somit wird das Transportelement 6 nach jedem Durchfahren des Aufnahmeraums 4 be-und entladen. Hierfür muss der Träger speziell bei der Aufnahme eines Vorformlings 10 auf der Oberseite zeitweise nicht immer im Aufnahmeraum angeordnet sein. Damit sind hier die zugeführten Kunststoffvorformlinge und die abgeführten Kunststoffvorformlinge zueinander höhenversetzt. Genauer sind auch die beiden Träger 20, 36 zueinander höhenversetzt.

Fig. 8 zeigt eine weitere Ausführungsform einer erfindungsgemäßen Vorrichtung. Bei dieser Ausführungsform ist eine Heizeinrichtung 2 in Form der Infrarotheizeinrichtung vorgesehen, in welche der Kunststoffvorformling ebenfalls eingeführt wird. Daneben ist optional zusätzlich ein Reflektorelement 54 vorgesehen, welches ebenfalls in den Kunststoffvorformling eingeführt werden kann. Dieses Reflektorelement kann dabei an einem (nicht gezeigten) Transportelement angeordnet sein, welches in die Mündung der Behältnisse eindringt. Die rechte Teildarstellung zeigt eine derartige Anordnung, wobei sich das Bezugszeichen 56 auf ein Zuführrad und das Bezugszeichen 58 auf ein Abführrad bezieht. Die Kunststoffvorformlinge werden dabei an eine Vielzahl von Heizstationen bzw. Heizeinrichtungen 2, die beispielsweise an einem Heizrad angeordnet sein können, übergeben. Der (nicht gezeigte) Heizdorn kann dabei eine separate Ansteuerung aufweisen.

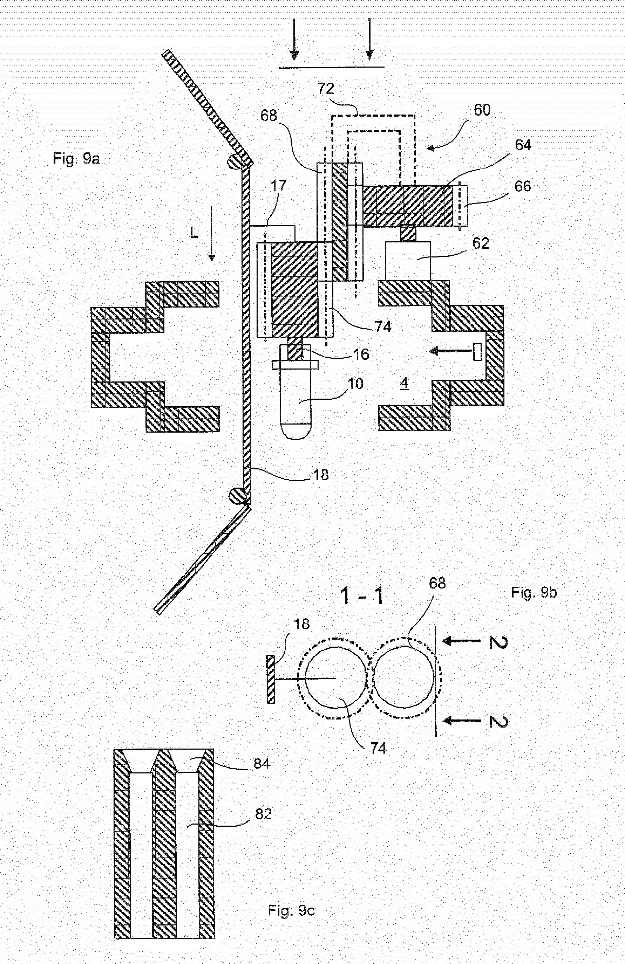

Die Fig. 9a bis 9c zeigen eine erfindungsgemäße Vorrichtung, bei der zusätzlich der Kunststoffvorformling 10 gedreht wird. Zu diesem Zweck weist die Vorrichtung eine Antriebseinrichtung 62 wie einen Motor auf, der wiederum ein erstes Antriebsrad 64 (welches eine Verzahnung 66 aufweist) antreibt, wobei dieses Antriebsrad 64 ein weiteres an einem Träger 72 drehbar angeordnetes Zahnrad 68 antreibt. Dieses Zahnrad 68 ist dabei als Langrad ausgeführt, d. h. es weist eine sich in der Längsrichtung L erstreckende lange Verzahnung auf. An dem Zwischenträger 17 ist wiederum drehbar ein angetriebenes Rad 74 angeordnet, welches ebenfalls eine Außenverzahnung aufweist.

Dabei ist das Zahnrad 74 gegenüber dem Zahnrad 68 in der Bewegungsrichtung L bewegbar. Solange diese beiden Träger in Eingriff miteinander stehen, wird daher der Kunststoffvorformling 10 um seine eigene Achse gedreht. Das Zahnrad 68 ist dabei nicht in einem Aufnahmeraum 4 angeordnet. Fig. 9b zeigt eine Draufsicht auf die einzelnen Antriebsräder. Man erkennt hier, dass die Räder 74 und 68 ineinander greifen. Das Bezugszeichen 60 kennzeichnet die Dreheinrichtung zum Drehen der Kunststoffvorformlinge in ihrer Gesamtheit.

Wie in Fig. 9c gezeigt, weist zusätzlich das Zahnrad 68 eine Fangphase 84 an dem oberen Ende auf, um die Verzahnung des Zahnrades 74, an dem der Kunststoffvorformling angeordnet ist, aufzunehmen. Dabei wäre es weiterhin möglich, dass die Antriebseinrichtung 62 zwischen zwei vorbeikommenden anzutreibenden Dornen stehenbleibt und mittels eines (nicht gezeigten) Sensors gesteuert wird, dass die beiden Verzahnungen ineinandergreifen. Weiterhin wäre es auch möglich, dass sich der Motor 62 bei jedem neuen Transportelement 16 auf eine bestimmte Drehposition ausrichtet, und das Transportelement 16 eine Einrastung aufweist, sodass er immer in der gleichen Drehausrichtung auf die Verzahnung trifft.

Die Anmelderin behält sich vor, sämtliche in den Anmeldungsunterlagen offenbarten Merkmale als erfindungswesentlich zu beanspruchen, sofern sie einzeln oder in Kombination gegenüber dem Stand der Technik neu sind.

### Bezugszeichenliste

- 1: Vorrichtung
- 2: Heizeinrichtung
- 4: Aufnahmeraum
- 5: Zuführeinrichtung
- 6: Transporteinrichtung
- 7: Abführeinrichtung
- 8: Resonator
- 10: Kunststoffvorformlinge
- 16: Transportelement, Heizdorn
- 17: Zwischenträger
- 18, 18a, 18b: Träger
- 20: Träger
- 21: Kurvenscheibe
- 22: Transportelement
- 24: Welle
- 25: Spalt
- 32: Halteelement, Transportelement
- 36: Träger
- 42: Einrichtung zum Lösen, stationäre Nocke
- 44: Federeinrichtung
- 52: Sensoreinrichtung
- 54: Reflektorelement
- 56: Zuführrad
- 58: Abführrad
- 60: Dreheinrichtung
- 62: Antriebseinrichtung, Motor
- 64: Antriebsrad
- 66: Verzahnung
- 68: Zahnrad
- 72: Träger
- 74: Zahnrad
- 82: Verzahnung
- 84: Fangfase
- L: Richtung
- P: Pfeil

## Patentansprüche

1. Vorrichtung (1) zum Erwärmen von Kunststoffvorformlingen (10), mit wenigstens einer Erwärmungseinrichtung (2), welche einen Aufnahmeraum (4) zum Aufnehmen der Kunststoffvorformlinge aufweist, in dem die Kunststoffvorformlinge (10) erwärmbar sind, mit wenigstens einer Transporteinrichtung (6) zum Einführen der Kunststoffvorformlinge (10) in den Aufnahmeraum (4) und zum Ausführen der Kunststoffvorformlinge (10) aus dem Aufnahmeraum (4), wobei die Transporteinrichtung (6) wenigstens ein Transportelement (16) zum Halten der Kunststoffvorformlinge (10) aufweist, und dieses Transportelement (16) an einem beweglichen Träger (17, 18) angeordnet ist
**dadurch gekennzeichnet, dass**
sich dieser Träger (17, 18) wenigstens abschnittsweise durch den Aufnahmeraum (4) erstreckt.

2. Vorrichtung (1) nach Anspruch 1,
**dadurch gekennzeichnet, dass**
die Vorrichtung (1) wenigsten zwei Transportelemente (16) aufweist, welche an dem Träger (17, 18) angeordnet sind.

3. Vorrichtung (1) nach Anspruch 1,
**dadurch gekennzeichnet, dass**
die Vorrichtung (1) mikrowellenbasiert ist und der Aufnahmeraum (4) innerhalb eines Resonators (8) der Vorrichtung (1) ausgebildet ist.

4. Vorrichtung (1) nach Anspruch 1,
**dadurch gekennzeichnet, dass**
sich der Träger (17, 18) wenigstens abschnittsweise in einer Längsrichtung (L) der Kunststoffvorformlinge (10) durch den Aufnahmeraum (4) erstreckt.

5. Vorrichtung (1) nach wenigstens einem der vorangegangenen Ansprüche,
**dadurch gekennzeichnet, dass** die Transporteinrichtung (6) die Kunststoffvorformlinge (10) entlang deren Längsrichtung (L) durch den Aufnahmeraum (4) transportiert.

6. Vorrichtung (1) nach wenigstens einem der vorangegangenen Ansprüche,
**dadurch gekennzeichnet, dass**
der Aufnahmeraum (4) stationär angeordnet ist.

7. Vorrichtung (1) nach wenigstens einem der vorangegangenen Ansprüche,
**dadurch gekennzeichnet, dass**
die Transporteinrichtung (6) eine Zuführeinrichtung (5) zum Zuführen der Kunststoffvorformlinge (10) in den Aufnahmeraum (4) und eine Abführeinrichtung (7) zum Abführen der Kunststoffvorformlinge (10) aus dem Aufnahmeraum (4) aufweist und die Zuführeinrichtung (5) sowie die Abführeinrichtung (7) voneinander getrennte Einheiten sind.

8. Vorrichtung (1) nach Anspruch 6,
**dadurch gekennzeichnet, dass**
der Aufnahmeraum (4) zwischen der Zuführeinrichtung (5) und der Abführeinrichtung (7) angeordnet ist.

9. Vorrichtung (1) nach wenigstens einem der vorangegangenen Ansprüche,
**dadurch gekennzeichnet, dass**
die Vorrichtung eine Dreheinrichtung (60) zum Drehen der Kunststoffvorformlinge (10) bezüglich deren Längsachse (L) aufweist.

10. Vorrichtung (1) nach wenigstens einem der vorangegangenen Ansprüche,
**dadurch gekennzeichnet, dass**
die Vorrichtung (1) eine Vorwärmeinheit zum Vorwärmen der Kunststoffvorformlinge (10) aufweist, welche in der Transportrichtung der Kunststoffvorformlinge (10) stromaufwärts bezüglich der Vorrichtung (1) angeordnet ist.

11. Verfahren zum Erwärmen von Kunststoffvorformlingen (10), wobei die Kunststoffvorformlinge (10) mittels einer Transporteinrichtung (6) in einen Aufnahmeraum (4) zum Aufnehmen der Kunststoffvorformlinge (10) eingeführt werden und mittels einer Transporteinrichtung (6) aus dem Aufnahmeraum (4) ausgeführt werden und wobei die Kunststoffvorformlinge (10) innerhalb des Aufnahmeraums (4) erwärmt werden, **dadurch gekennzeichnet, dass**
wenigstens ein Element wenigstens einer Transporteinrichtung (6) wenigstens zeitweise während eines Erwärmungsvorgangs innerhalb des Aufnahmeraums (4) bewegt wird.

12. Verfahren nach Anspruch 10,
**dadurch gekennzeichnet, dass**
die Kunststoffvorformlinge (10) vereinzelt mit einer Vielzahl von an einem Träger (18) angeordneten Transportelementen (16) transportiert werden und sich der Träger (18) zumindest abschnittsweise innerhalb des Aufnahmeraums (4) bewegt.

13. Verfahren nach Anspruch 10,
**dadurch gekennzeichnet, dass**
die Kunststoffvorformlinge (10) dem Aufnahmeraum (4) an einer ersten Position zugeführt werden und aus dem Aufnahmeraum (4) an einer zweiten Position abgeführt werden, wobei sich die erste Position und die zweite Position unterscheiden.
